(19) Europäisches Patentamt European Patent Office Office européen des brevets

(11) **EP 4 550 277 B1**

(12) **EUROPEAN PATENT SPECIFICATION**

(45) Date of publication and mention
of the grant of the patent:
**05.08.2026 Bulletin 2026/32**

(21) Application number: **23206754.6**

(22) Date of filing: **30.10.2023**

(51) International Patent Classification (IPC):
***G06V 20/59*** *(2022.01)*

(52) Cooperative Patent Classification (CPC):
**G06V 20/597**

(54) **METHOD AND SYSTEM FOR MONITORING ATTENTIVENESS**

VERFAHREN UND SYSTEM ZUR ÜBERWACHUNG VON AUFMERKSAMKEIT

PROCÉDÉ ET SYSTÈME DE SURVEILLANCE DE L'ATTENTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**07.05.2025 Bulletin 2025/19**

(73) Proprietors:
• **TOYOTA JIDOSHA KABUSHIKI KAISHA Toyota-shi, Aichi-ken, 471-8571 (JP)**
• **Glimpse Technology Limited Bristol BS6 5JH (GB)**

(72) Inventors:
• **ABDELKAWY, Hazem**
**1140 BRUSSELS (BE)**
• **PALMER, Luke**
**BRISTOL, BS6 5JH (GB)**
• **PALASEK, Peter**
**London, NW6 3NL (GB)**

(74) Representative: **Cabinet Beau de Loménie**
**103, rue de Grenelle**
**75340 Paris Cedex 07 (FR)**

(56) References cited:
**US-A1- 2018 225 554**

• **ANUP DOSHI ET AL: "Attention estimation by simultaneous observation of viewer and view", COMPUTER VISION AND PATTERN RECOGNITION WORKSHOPS (CVPRW), 2010 IEEE COMPUTER SOCIETY CONFERENCE ON, IEEE, PISCATAWAY, NJ, USA, 13 June 2010 (2010-06-13), pages 21 - 27, XP031728459, ISBN: 978-1-4244-7029-7**
• **PALAZZI ANDREA ET AL: "Predicting the Driver's Focus of Attention: The DR(eye)VE Project", IEEE TRANSACTIONS ON PATTERN ANALYSIS AND MACHINE INTELLIGENCE, IEEE COMPUTER SOCIETY, USA, vol. 41, no. 7, 1 July 2019 (2019-07-01), pages 1720 - 1733, XP011728030, ISSN: 0162-8828, [retrieved on 20190603], DOI: 10.1109/TPAMI.2018.2845370**
• **KLEIN RAYMOND M: "Inhibition of return", TRENDS IN COGNITIVE SCIENCES, vol. 4, no. 4, 13 June 2010 (2010-06-13), pages 138 - 147, XP085036286, ISSN: 1364-6613, DOI: 10.1016/ S1364-6613(00)01452-2**

EP 4 550 277 B1

## EP 4 550 277 B1

**Description**

BACKGROUND OF THE INVENTION

1. Field of the invention

The present disclosure relates to a computer-implemented method for monitoring attentiveness of a human operator.

2. Description of Related Art

Operating safety has been a concern since the inception of machinery and other vehicles, primarily due to operator inattention, which can result from multitasking or distractions. The importance of understanding where and when human operators focus their attention is paramount for enhancing safety and preventing accidents, in particular in the field of vehicles, as noted by Charlie Klauer et al. in "The impact of driver inattention on near-crash/crash risk: An analysis using the 100-car naturalistic driving study data", United States. National Highway Traffic Safety Administration (2006) and by Chloe Robbins and Peter Chapman in "How does drivers' visual search change as a function of experience? A systematic review and meta-analysis", Accident Analysis & Prevention 132 (2019), p. 105266.

Technological advancements aim to mitigate accidents caused by human errors. These include Advanced Driver Assistance Systems (ADAS) that are now becoming standard in various vehicle models. These systems can spot specific dangers and take preventative measures, although they do not usually consider the driver's state or intent, as noted by Lishengsa Yue et al. in "Assessment of the safety benefits of vehicles' advanced driver assistance, connectivity and low level automation systems", Accident Analysis & Prevention 117 (2018), pp. 55-64.

Driver Monitoring Systems (DMS) come into play to assess the driver's attention and readiness. While current DMS largely rely on vehicle controls for assessment, in has been proposed for DMS to incorporate in-vehicle cameras to observe and guide the driver's attention as needed, which could be particularly vital for vehicles with automation levels 2-4, as noted by Alaa El Khatib, Chaojie Ou, and Fakhri Karray in "Driver inattention detection in the context of next-generation autonomous vehicles design: A survey", IEEE Transactions on Intelligent Transportation Systems 21.11 (2019), pp. 4483-4496, by John Gaspar and Cher Carney. "The effect of partial automation on driver attention: A naturalistic driving study", Human factors 61.8 (2019), pp. 1261-1276, by Joost CF De Winter et al. in "Effects of adaptive cruise control and highly automated driving on workload and situation awareness: A review of the empirical evidence", Transportation research part F: traffic psychology and behaviour 27 (2014), pp. 196-217, and by Tobias Vogelpohl et al. in "Asleep at the automated wheel-Sleepiness and fatigue during highly automated driving", Accident Analysis & Prevention 126 (2019), pp. 70-84.. DMS, in conjunction with ADAS, is seen as a crucial step toward enhanced road safety, with initiatives aiming for zero fatalities by 2050.

Driver monitoring systems (DMS) can play a crucial role in enhancing road safety, with their primary function being to identify and alert drivers about potential hazardous behaviours, notably, distractions. Algorithms developed for distraction detection primarily assess alterations in human operators' gaze patterns, attributable to secondary task involvement, such as using a phone or succumbing to cognitive distractions. Distraction detection, from a computational perspective, often translates to a multi-class classification challenge. Distractions manifest differently, thus, algorithms predominantly either detect a specific type of distraction or differentiate between various distractions. Among the plethora of distractions, cognitive and visuo-manual distractions have garnered the most attention in recent research.

A shared aspect across nearly all distraction detection methodologies is the use of temporal data, typically spanning between 2 to 10 seconds. To capture gaze patterns, many algorithms employ eye-tracking data as described by Ruohan Wang, Pierluigi V Amadori, and Yiannis Demiris in "Real-time workload classification during driving using hypernetworks", 2018 IEEE/RSJ International Conference on Intelligent Robots and Systems (IROS), IEEE, 2018, pp. 3060-3065, by Tianchi Liu et al. in "Cluster regularized extreme learning machine for detecting mixed-type distraction in driving", 2015 IEEE 18th International Conference on Intelligent Transportation Systems. IEEE. 2015, pp. 1323-1326. or by Keshav Seshadri et al in "Driver cell phone usage detection on strategic highway research program (SHRP2) face view videos", Proceedings of the IEEE Conference on Computer Vision and Pattern Recognition Workshops, 2015, pp. 35-43. Other algorithms have instead employed manual annotations, as described by Takatsugu Hirayama et al. in "Analysis of peripheral vehicular behavior in driver's gaze transition: Differences between driver's neutral and cognitive distraction states", 17th International IEEE Conference on Intelligent Transportation Systems (ITSC), IEEE, 2014, pp. 962-967, by Fabio Tango and Marco Botta in "Real-time detection system of driver distraction using machine learning", IEEE Transactions on Intelligent Transportation Systems 14.2 (2013), pp. 894-905, or by Yulan Liang, John D Lee, and Lora Yekhshatyan. "How dangerous is looking away from the road? Algorithms predict crash risk from glance patterns in naturalistic driving", Human factors 54.6 (2012), pp. 1104-1116. Fewer algorithms use explicit feature extraction pipelines, with some relying on facial landmarks, as described by Lichao Yang et al. in "Recognition of visual-related non-driving activities using a dual-camera monitoring system", Pattern Recognition 116 (2021), p. 107955, or using extracted head poses from camera images as described by Björn Schuller Schuller et al. "Online Driver Distraction Detection Using Long Short-Term Memory", 2020. The richness of data sources augments the accuracy of these algorithms.

Beyond the gaze of the human operator, the inclusion of vehicle data, as described by Nanxiang Li and Carlos Busso in "Detecting drivers' mirror-checking actions and its application to maneuver and secondary task recognition", IEEE Transactions on Intelligent Transportation Systems 17.4 (2015), pp. 980-992, or by Yuan Liao et al. in "Detection of driver cognitive distraction: A comparison study of stop-controlled intersection and speed-limited highway", IEEE Transactions on Intelligent Transportation Systems 17.6 (2016), pp. 1628-1637, physiological signals as described by Jie Chen et al. in "Fine-grained detection of driver distraction based on neural architecture search", IEEE Transactions on Intelligent Transportation Systems 22.9 (2021), pp. 5783-5801, audio detection of conversations, and scene objects have all shown promise in refining distraction detection.

In terms of classification models, the Support Vector Machine (SVM) stands out as the most popular, being employed in a significant number of algorithms like those described in the abovementioned papers by Nanxiang Li and Carlos Busso and by Keshav Seshadri et al., as well as by Yuan Liao et al in "Detection of driver cognitive distraction: A comparison study of stop-controlled intersection and speed-limited highway", IEEE Transactions on Intelligent Transportation Systems 17.6 (2016), pp. 1628-1637. Alternatives demonstrating efficacy include boosting, K-means, as described by Nanxiang Li and Carlos Busso in "Predicting perceived visual and cognitive distractions of drivers with multimodal features", IEEE Transactions on Intelligent Transportation Systems 16.1 (2014), pp. 51-65, Hidden Markov Models (HMM) as described by Mauricio Muñoz et al in "Distinguishing patterns in drivers' visual attention allocation using Hidden Markov Models", Transportation research part F: traffic psychology and behaviour 43 (2016), pp. 90-103, and cutting-edge deep learning methods like recurrent and convolutional neural networks as described by Jie Chen et al. in "Fine-grained detection of driver distraction based on neural architecture search", IEEE Transactions on Intelligent Transportation Systems 22.9 (2021), pp. 5783-5801, by Ruohan Wang, Pierluigi V Amadori, and Yiannis Demiris. "Real-time workload classification during driving using hypernetworks", 2018 IEEE/RSJ International Conference on Intelligent Robots and Systems (IROS), IEEE, 2018, pp. 3060-3065, and by Martin Wollmer et al. in "Online driver distraction detection using long short-term memory", IEEE Transactions on Intelligent Transportation Systems 12.2 (2011), pp. 574-582.

However, challenges remain. Existing datasets primarily encapsulate a narrow spectrum of non-driving related tasks (NDRTs), leading to over-optimized algorithms. A novel approach described by Katja Kircher and Christer Ahlström in "The driver distraction detection algorithm AttenD", Driver distraction and inattention. CRC Press, 2017, pp. 327-348, shifts the focus from specific activities, detecting inattention based on off-road glances, inspired by evidence linking prolonged off-road glances to increased crash risks presented in the Visual-Manual NHTSA Driver Distraction Guidelines for In-Vehicle Electronic Devices of 2012.

Towards a more nuanced understanding of distraction, there's an evolving emphasis on associating driver attention with pertinent objects within their environment. This approach intends not merely to monitor a driver's activity but to holistically assess their awareness and contextual behaviour, thereby enhancing driver assistance systems. At the heart of these systems is a process that determines the driver's gaze direction, transposes it into the vehicle's frame of reference, identifies objects in the immediate vicinity, and evaluates whether the driver has indeed focused on these objects. Techniques range from sophisticated algorithms, as mentioned by Yinan Ma, Jing Wu, and Chengnian Long in "GazeFCW: Filter Collision Warning Triggers by Detecting Driver's Gaze Area", Proceedings of the 1st Workshop on Machine Learning on Edge in Sensor Systems. 2019, pp. 13-18, to classical vision pipelines as described by Michael Bauer et al in "Detection and recognition of traffic signs inside the attentional visual field of drivers" and by Tobias Langner et al. in "Traffic awareness driver assistance based on stereovision, eye-tracking, and head-up display", 2016 IEEE International Conference on Robotics and Automation (ICRA), IEEE, 2016, pp. 3167-3173, and manual bounding boxes, as described by Ashish Tawari et al. in "Attention estimation by simultaneous analysis of viewer and view", 17th International IEEE Conference on Intelligent Transportation Systems (ITSC), IEEE, 2014, pp. 1381-1387. As further described by Tobias Langner et al. in their abovementioned paper, as well as by Julian Schwehr and Volker Willert in "Multi-hypothesis multi-model driver's gaze target tracking". In: 2018 21st International Conference on Intelligent Transportation Systems (ITSC). IEEE. 2018, pp. 1427-1434, various tools, from stereo cameras to range sensors, may help discern object distances and velocities.

While basic methods check if the driver's gaze aligns with an object's bounding box, as described by Yinan Ma, Jing Wu, and Chengnian Long in their abovementioned papers, as well as by Ashish Tawari et al in "Attention estimation by simultaneous analysis of viewer and view", 17th International IEEE Conference on Intelligent Transportation Systems (ITSC), IEEE, 2014, pp. 1381-1387 and by Tobias Bär et al. in "Seen and missed traffic objects: A traffic object-specific awareness estimation", 2013 IEEE Intelligent Vehicles Symposium (IV), IEEE, 2013, pp. 31-36, others interpret attention as a projected cone from the driver's eyes, as described by Michael Bauer and by Tobias Langner et al. in their abovementioned papers. Cognitive aspects of driving, such as memory retention post-observation, and other environmental variables like weather conditions, are integrated by some systems, like those described in the abovementioned paper by Yinan Ma, Jing Wu, and Chengnian Long, as well as by Masataka Mori et al. in "Measuring driver awareness based on correlation between gaze behavior and risks of surrounding vehicles", 2012 15th International IEEE Conference on Intelligent Transportation Systems, IEEE, 2012, pp. 644-647 and by Christer Ahlstrom, George Georgoulas, and Katja Kircher. "Towards a context-dependent multi-buffer driver distraction detection algorithm", IEEE transactions on intelligent transportation systems 23.5 (2021), pp. 4778-4790.

In conclusion, while significant strides have been made in distraction detection within DMS, intricacies arising from the interplay of individual behaviors, environmental context, and technology warrant further exploration.

Several notable models have been proposed to enhance situation awareness prediction. However, each of these models presents certain limitations which the present disclosure seeks to address.

The work by Mahdi Rezaei and Reinhard Klette in "Look at the driver, look at the road: No distraction! no accident!" In: Proceedings of the IEEE conference on computer vision and pattern recognition. 2014, pp. 129-136, integrates both the driver's head pose and road hazards to deter rear-end collisions due to distractions or fatigue. However, their reliance on a fuzzy fusion system results in black box computations which lack transparency. More critically, their system fails to account for the continuous, dynamic gaze behavior that is integral to understanding human attention mechanisms.

Similarly, the work by Luke Fletcher and Alexander Zelinsky in "Driver inattention detection based on eye gaze-Road event correlation", The international journal of robotics research 28.6 (2009), pp. 774-801, offers an integrated approach considering both the driver and environment. While it brings forward the commendable ability to detect missed road events, it categorically classifies objects as detected or not. This binary treatment fails to offer the granularity achievable with a continuous system. Moreover, the model does not capture gaze dynamics and is not optimized for real-world distraction detection.

Work described by Yinan Ma, Jing Wu, and Chengnian Long in their abovementioned paper, significantly enhances collision warning efficiency by considering the direction of the operator's gaze. However, its handling of gaze dynamics is relatively simplistic. Additionally, while the method reduces unnecessary warning triggers, the optimization is not specifically directed at detecting distraction events.

Lastly, the model described by Markus Hofbauer et al. in "Measuring driver situation awareness using region-of-interest prediction and eye tracking", 2020 IEEE International Symposium on Multimedia (ISM). IEEE. 2020, pp. 91-95, seeks to measure the driver's situation awareness directly. However, it imposes a stringent boundary on awareness, depending on fixations within a set radius. This binary approach may miss the nuances of actual human attention mechanisms. Furthermore, like the aforementioned models, it also fails to incorporate the biologically inspired gaze dynamics and is not tailored for distraction event detection.

In particular, neither of these three models accounts for the intricate and biologically plausible "inhibition of return" (IOR) mechanism that was first observed in the domain of cognitive psychology as a deterrent against the repeated allocation of attention to a previously examined location, and was referred to by Anup Doshi et al in "Attention estimation by simultaneous observation of viewer and view", 2010 IEEE Computer Society Conference on Computer Vision and Pattern Recognition Workshops (CVPRW), pp. 21-27. In essence, once an individual's attention has been directed to a certain location and subsequently shifts away, there is an inhibitory effect which makes it less likely for the attention to return to that original spot in the immediate future.

IOR is believed to play a vital role in promoting efficient visual search by discouraging the visual system from repeatedly sampling the same location. The seminal work of Michael I Posner, Yoav Cohen, et al. in "Components of visual orienting", Attention and performance X: Control of language processes 32 (1984), pp. 531-556, illuminated this concept when they discovered that while cues in a visual scene can attract attention initially, they subsequently repel it. Raymond M Klein, in "Inhibition of return", Trends in cognitive sciences, 4.4 (2000), pp. 138-147,.further validated this observation by demonstrating that this inhibitory effect increases the reaction time when a target reappears at a previously attended location.

Research into the temporal dynamics of Inhibition of Return (IOR) has sought to unravel the intricacies of its onset, shape and duration. Historically, investigations primarily relied on contrasting cued versus uncued conditions across a range of Cue-Target Onset Asynchronies (CTOA), as seen in the works of Juan Lupiáñez et al, "Does IOR occur in discrimination tasks? Yes, it does, but later", Perception & psychophysics 59 (1997), pp. 1241-1254, and Arthur G Samuel and Donna Kat. "Inhibition of return: A graphical meta-analysis of its time course and an empirical test of its temporal and spatial properties", Psychonomic bulletin & review 10 (2003), pp. 897-906. Although insightful, this methodology, anchored in multi-setting CTOA studies, occasionally fell short of capturing the nuanced temporal transitions of IOR. Such shortcomings became particularly evident with emerging evidence of oscillatory responses triggered by peripheral cues, as described by Kun Song et al. in "Behavioral oscillations in attention: rhythmic $\alpha$ pulses mediated through $\theta$ band", Journal of Neuroscience 34.14 (2014), pp. 4837-4844.

Addressing this gap, the Steady-State Visual Evoked Potential (SSVEP) technique was introduced by Ai-Su Li et al. in "The time course of inhibition of return: Evidence from steady-state visual evoked potentials", Frontiers in psychology 8 (2017), p. 1562., offering a refined lens to observe IOR dynamics with millisecond precision. Utilizing this method, researchers observed that following a cue onset, there was a pronounced increase in the SSVEP amplitude, a metric of neural activity, around 180 ms post-stimulus.

Intriguingly, this initial facilitative response soon transitioned into an inhibitory one within a mere 20 ms span. This swift transition, positioned approximately at the 200 ms mark, has been corroborated by the abovementioned comprehensive meta-analysis by Arthur G Samuel and Donna Kat, which synthesized data from 27 distinct studies and identified a facilitation-to-IOR shift around 220 ms. This finding also aligns closely with Klein's previous theoretical postulations on the IOR temporal framework.

SUMMARY

The object of the present invention is to at least substantially remedy the above-mentioned drawbacks of previous methods and systems, by more accurately considering the gaze dynamics of human operators when monitoring their attentiveness.

In this respect, a first aspect of the present disclosure relates to a computer-implemented method, according to claim 1, for monitoring attentiveness of a human operator. The inhibition-of-return coefficient may be calculated as a double gamma function of the time elapsed since the gaze of the human operator was last fixated on the object of interest. The importance score for the object of interest may in particular be weighed by multiplication by the inhibition-of-return coefficient, and the individual attention score for the object of interest may in particular be calculated by multiplying the importance score of the object of interest by an exponential decay function of the current distance between the object of interest and the gaze of the human operator.

Through the calculation of the an inhibition-of-return coefficient for the object of interest, as a function of a time elapsed since a gaze of the human operator was last fixated on the object of interest, and the weighing of the importance score of the object of interest based on the inhibition-of-return coefficient calculated for the object of interest, the present method incorporates an active vision feedback mechanism which accounts for the gaze dynamics of the human operator when calculating the attention score for the object of interest. Using, for the calculation of the inhibition-of-return coefficient, a double-gamma function, commonly used in modeling neural haemodynamic response, as disclosed by William D. Penny et al. in "Statistical Parametric Mapping: The Analysis of Functional Brain Images", allows for the inclusion of both an initial facilitatory phase, wherein the gaze is further drawn towards the object-of-interest after the initial fixation, and a subsequent inhibitory phase, during which the gaze is rather drawn away from the object of interest.

The distance between the object of interest and the gaze of the human operator may be measured as an Euclidean distance in the image plane of the video feed.

The gaze of the human operator may be determined to be fixated on the object of interest when the gaze is within a predetermined distance from a centroid of the object of interest. Alternatively, however, gaze of the human operator may be determined to be fixated on the object of interest when the gaze is within a boundary associated with the object of interest.

When the human operator is operating a vehicle, the importance score may be calculated based on a time-to-collision with respect to the object of interest. However, an alternative hazard estimation model, offering an estimate of the object's significance concerning potential driving hazards, may alternatively be used for the calculation of this importance score.

The overall attention score may be calculated for at least a selection of the plurality of objects of interest, for example, as a mean of the individual attention scores calculated for at least a selection of the plurality of objects of interest, and the current distraction score may be calculated for example by dividing a mean average of the importance scores of at least a selection of the plurality of objects by the overall attention score.

The current and overall distraction scores may therefore be continuously computed relative to many objects of interest to provide a complete picture of the attentiveness of the human operator in a complex visual environment currently and over a given time frame.

The method can thus be used to ensure operating safety, for instance in a Driver Monitoring System associated to an Advanced Driver Assistance System (ADAS) of a vehicle.

A second aspect of the present disclosure relates to a computer program set including instructions for executing the steps of the method according to the first aspect when said program set is executed by at least one computer.

A third aspect of the present disclosure relates to a recording medium readable by at least one computer and having recorded thereon at least one computer program including instructions for executing the steps of the method according to the first aspect.

A fourth aspect of the present disclosure relates to a system for monitoring attentiveness of a human operator, comprising a data processing device adapted to perform the steps of the method. The system may further comprise a camera for providing the video feed of a scene at least partially overlapping the field of view of the human operator, an eye-tracking device for tracking the gaze of the human operator and/or an output device for outputting the visual, haptic and/or audible warning and/or interrupting operation by the human operator.

A fifth aspect of the present disclosure relates to a vehicle comprising the system according to the fourth aspect, for monitoring attentiveness of a human operator of the vehicle.

BRIEF DESCRIPTION OF THE DRAWINGS

Features, advantages, and technical and industrial significance of an exemplary embodiment of the invention will be described below with reference to the accompanying drawings, in which like signs denote like elements, and wherein:

- FIG. 1 is a schematic view of a vehicle, operated by a human operator and including a system for monitoring attentiveness of the human operator according to the embodiment, within an environment including several objects of interest;
- FIG.2 is a functional diagram of the system for monitoring attentiveness of the human operator of the vehicle of FIG. 1; and
- FIG. 3 is a schematic view of a frame of a video feed overlapping with a field of view of the human operator of FIG. 1.

DETAILED DESCRIPTION OF EMBODIMENTS

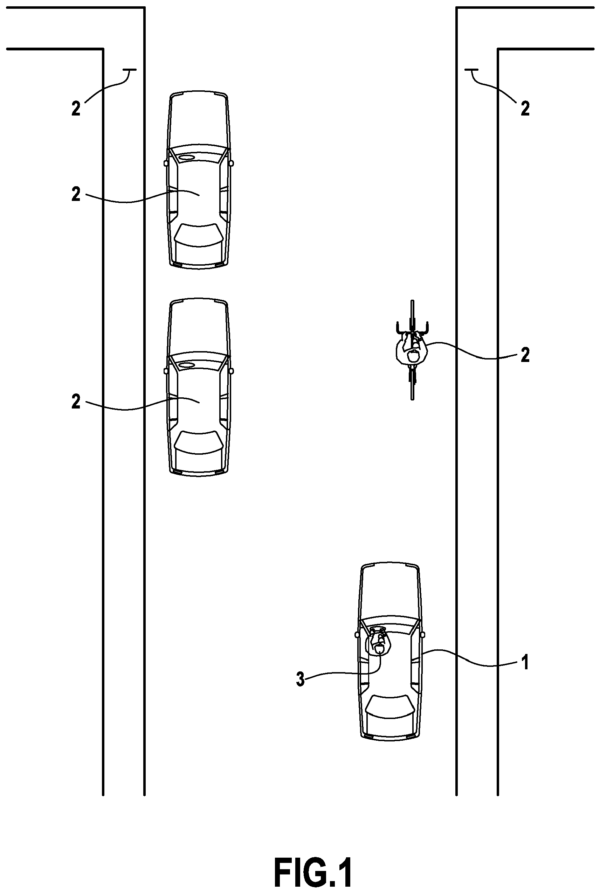

As illustrated in Fig. 1, a vehicle 1 may operate in a complex environment including a plurality of objects of interest 2 that may each represent a potential obstacle in the path of the vehicle 1, such as another vehicle, a pedestrian, an animal, or an inanimate obstacle, etc., but also e.g. signage. The vehicle 1 may be operated by a human operator 3, which as in the illustrated example may be a driver onboard the vehicle 1 itself, but could alternatively be a remote operator connected to the vehicle over a remote communication network, for instance over a wireless communication network.

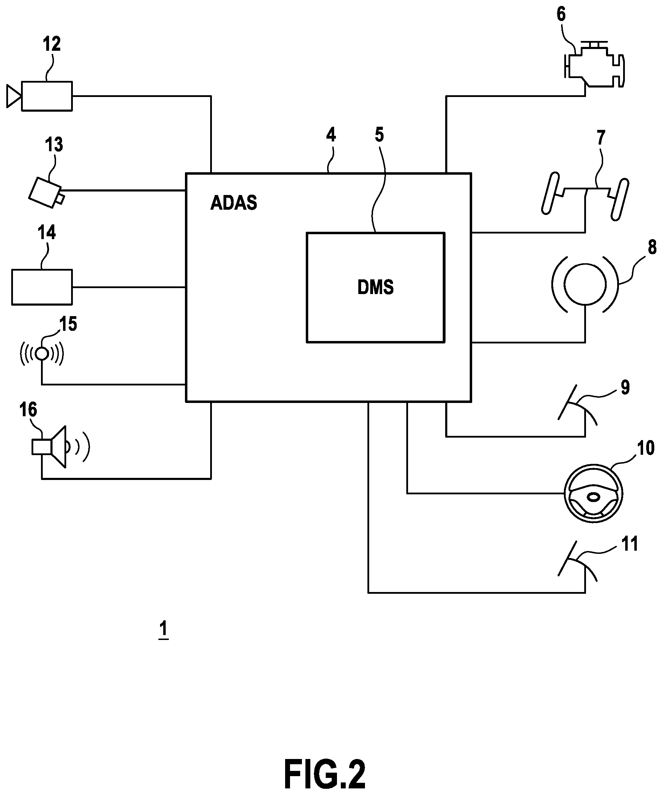

As illustrated in Fig. 2, the vehicle 1 may incorporate an Advanced Driver Assistance System (ADAS) 4, configured to perform e.g. adaptive cruise control, lane tracking, collision avoidance and/or other advanced driver assistance tracks. Such an ADAS 4 may comprise a Driver Monitoring System (DMS) 5. Both the ADAS 4 and DMS 5 may be incorporated in a data processing device, such as an Electronic Control Unit (ECU), onboard the vehicle 1, although each or both of them may also be distributed over a plurality of interconnected data processing devices forming a distributed computer environment, and which may include both onboard data processing devices and remote data processing devices connected to the vehicle over a remote communication network, for instance over a wireless communication network.

The vehicle 1 may further comprise a prime mover 6, such as an internal combustion engine and/or an electric motor, a steering system 7 and/or a braking system 8, which may each be connected to the ADAS 4, as well as a driver interface provided to receive driver inputs for the prime mover 6, steering system 7 and/or braking system 8, and which may notably include an accelerator pedal 9, a steering wheel 10 and/or a brake pedal 11, each one of which may be connected to the ADAS 4 and/or DMS 5.

The vehicle 1 may further comprise a forward-facing camera 12 for providing a video feed of a scene at least partially overlapping the field of view of the human operator 3. In particular, this forward-facing camera 12 may be a stereoscopic camera, or incorporate a distance-ranging device, in order to provide depth data of the scene with the video feed. The forward-facing camera 12 may be connected to the ADAS 4 and/or DMS 5. The video feed may in particular take the form of a continuous stream of RGB images, each RGB image representing a frame of the video feed, captured at a rate of e.g. 10 frames per second.

The vehicle 1 may further comprise an eye-tracking device 13, for tracking the gaze of the human operator 3. In particular, this eye-tracking device 13 may comprise an operator-facing camera for providing a video feed of the eyes of the human operator 3, from which a data processing device, possibly integrated with the DMS 5, may determine and track the gaze of the human operator.

The vehicle 1 may also comprise visual, haptic and/or aural output devices, such as a display 14, a buzzer 15 and/or a loudspeaker 16, which may be connected to the ADAS 4 and/or DMS 5.

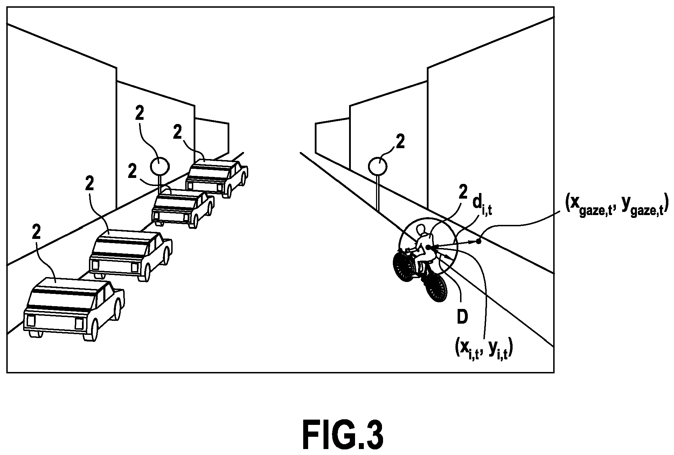

The ADAS 4 and/or DMS 5 may be configured to detect and track the objects of interest 2 within the scene relayed by the video feed from the forward-facing camera 12, as illustrated in Fig. 3, which represents a frame of this video feed.

The ADAS 4 and/or DMS 5 may further be configured to detect and track the objects of interest 2 within the frames of the video feed, attribute an importance score to each object of interest 2 and, based on these importance scores and the gaze dynamics of the human operator 3, as tracked using the eye-tracking device 13, calculate current and/or overall distraction scores for the human operator 3 and eventually, when said current and/or overall distraction scores exceed a predetermined threshold, output a visual, haptic and/or aural warning through the display 14, buzzer 15 and/or loudspeaker 16 and/or interrupt operation of the vehicle 1 by the human operator 3. For that purpose, the ADAS 4 and/or DMS 5 may be adapted to execute a method for monitoring attentiveness of the human operator 3 as follows:

For each time step $t$, a video feed frame $F_t$ may first be received from the forward-facing camera 12. Then, utilizing state-of-the-art object detection algorithms, such as e.g. the faster r-cnn algorithm described by S. Ren, K. He, R. Girshick, and J. Sun in "Faster r-cnn: towards real-time object detection with region proposal networks," IEEE Transactions on Pattern Analysis & Machine Intelligence, no. 6, pp. 1137-1149, 2017, the SPPN algorithm described by K. He, X. Zhang, S. Ren, and J. Sun in "Spatial pyramid pooling in deep convolutional networks for visual recognition", ECCV. Springer, 2014, pp. 346-361, the YOLO family of algorithms described by J. Redmon, S. Divvala, R. Girshick, and A. Farhadi in "You only look once: Unified, real-time object detection", CVPR, 2016, pp. 779-788, or the DETR algorithm disclosed by N. Carion, F. Massa, G. Synnaeve, N. Usunier, A. Kirillov, and S. Zagoruyko in "End-to-end object detection with transformers", European Conference on Computer Vision. Springer, 2020, pp. 213-229, objects of interest 2 such as pedestrians, other vehicles, and signage may be identified within this frame $F_t$:

$$O_t := Detect(F_t)$$

wherein $O_t$ represents the set of detected objects of interest 2 in the frame $F_t$.

Following detection, the objects of interest 2 detected in the frame $F_t$ may be then subjected to a tracking mechanism, such as e.g. the combination of Kalman filter and Hungarian algorithm taught by K. Wang, and M. Liu in "YOLOv3-MT: A YOLOv3 using multi-target tracking for vehicle visual detection", Applied Intelligence doi:10.1007/s10489-021-02491-3, the SORT and DeepSORT tracking mechanisms taught by Pereira, R., Carvalho, G., Garrote, L., and Nunes, U. J. in "Sort and deep-SORT based multi-object tracking for mobile robotics: Evaluation with new data association metrics", Applied Sciences, 12(3), 1319, 2022, the OCSORT tracking mechanism taught by Cao, J., Pang, J., Weng, X., Khirodkar, R., and Kitani, K. in "Observation-centric sort: Rethinking sort for robust multi-object tracking", Proceedings of the IEEE/CVF Conference on Computer Vision and Pattern Recognition (pp. 9686-9696), 2023, or the traffic specific tracking taught by Tian, W., Lauer, M., and Chen, L., in "Online multi-object tracking using joint domain information in traffic scenarios", IEEE Transactions on Intelligent Transportation Systems, 21(1), 374-384, 2019, matching them to the objects of interest 2 detected and tracked in previous frames to maintain a consistent identity for each object of interest 2 across successive frames, facilitating temporal analyses:

$$T_t := Track(O_t, T_{t-1})$$

wherein $T_t$ represents the set of tracked objects of interest 2 at time step $t$, given the set of tracked objects of interest 2 at the previous time step $t-1$.

An importance score $I_{i,t}$ may then be computed for each detected and tracked object of interest 2 from among the $N$ detected and tracked objects of interest 2:

$$I_{i,t} := EstimateImportance(O_t)$$

wherein $i$ corresponds to each integer from 1 to $N$.

For that purpose, paths of the vehicle 1 and objects of interest 2 may be predicted, e.g. as taught by Althoff, M., Mergel, A. in "Comparison of markov chain abstraction and monte carlo simulation for the safety assessment of autonomous cars", IEEE Transactions on Intelligent Transportation Systems 12(4), 1237-1247 (2011) or by Greene, D., Liu, J., Reich, J., Hirokawa, Y., Shinagawa, A., Ito, H., Mikami, T. in "An efficient computational architecture for a collision early-warning system for vehicles, pedestrians, and bicyclists", IEEE Transactions on intelligent transportation systems 12(4), 942-953 (2011), and analyzing motion patterns seen in actual accidents or near-miss situations, as taught for instance by Salim, F.D., Loke, S.W., Rakotonirainy, A., Srinivasan, B., and Krishnaswamy, S. in "Collision pattern modeling and real-time collision detection at road intersections", IEEE Intelligent Transportation Systems Conference, pp. 161-166, IEEE (2007), to attribute a metric indicative of collision risk, such as a Time-to-Collision (TTC) of the vehicle 1 with respect to the object of interest 2, as in methods compiled by Lefèvre, S., Vasquez, D. and Laugier, C. in "A survey on motion prediction and risk assessment for intelligent vehicles", ROBOMECH journal 1(1), 1-14 (2014). The importance score $I_{i,t}$ may then be computed based on said metric.

Alternatively or complementarily to this, the importance score $I_{i,t}$ may be computed using a hazard estimation model offering an estimate of the significance of the object of interest 2 concerning potential driving hazards. Such a hazard estimation model may be created for instance by machine learning from datasets with hand-labelled importance score values, as taught e.g. by Gao, M., Tawari, A., Martin, S. in "Goal-oriented object importance estimation in on-road driving videos", 2019 International Conference on Robotics and Automation (ICRA). pp. 5509-5515. IEEE (2019), disclosing how a binary classifier was taught to distinguish between important and irrelevant objects. Alternatively, a self-driving convolutional neural network's attention feature may be used to determine the importance of individual scene pixels, and then an importance score may be computed from this for the object of interest 2 via a post-processing causal inference algorithm, as taught by Kim, J. and Canny, J. in "Interpretable learning for self-driving cars by visualizing causal attention", Proceedings of the IEEE international conference on computer vision, pp. 2942-2950 (2017). Yet another alternative would be to use an object-centric scene graph, wherein each graph node corresponds to an object of interest 2, and a self-driving graph convolutional network to determine which objects of interest 2, when removed, would reduce a predicted braking likelihood, as taught by Li, C., Chan, S.H. and Chen, Y.T. in "Driver-centric risk object identification", arXiv preprint arXiv:2106.13201 (2021), and attribute the importance score $I_{i,t}$ accordingly.

A current position $(x_{gaze}, y_{gaze})_t$ of the gaze of the human operator 3 within the current frame $F_t$ may be calculated, based on eye-tracking data obtained with the eye-tracking device 13. Then, a current distance $d_{i,t}$ of the gaze to each object of interest 2 from among the $N$ detected and tracked objects of interest 2 within the current frame $F_t$ may be calculated, for instance as an Euclidian distance, in a two-dimensional image plane of the current frame $F_t$, between the current position $(x_{gaze,t}, y_{gaze,t})$ of the gaze of the human operator 3 and a current position $(x_{i,t}, y_{i,t})$ of a centroid of the corresponding object of interest 2:

$$d_{i,t} = \sqrt{\left(x_{gaze,t} - x_{i,t}\right)^2 + \left(y_{gaze,t} - y_{i,t}\right)^2}$$

Alternatively, however, the distance $d_{i,t}$ of the gaze to each object of interest 2 may be measured to a closest boundary of the object of interest 2, rather than to its centroid.

Once the distance $d_{i,t}$ of the gaze to each object of interest 2 from among the $N$ detected and tracked objects of interest 2 within the current frame $F_t$ is calculated, it may be determined whether the gaze is fixated on one of the $N$ detected and tracked objects of interest 2. For this, the distance $d_{i,t}$ of the gaze to each object of interest 2 may be compared to a predetermined threshold $D$. If the distance $d_{i,t}$ of the gaze to an object of interest 2 from among the $N$ detected and tracked objects of interest 2 within the current frame $F_t$ does not exceed that predetermined threshold $D$, the gaze may be determined to be fixed on that object of interest 2. However, for this determination, it may be required that the distance $d_{i,t}$ of the gaze to this object of interest 2 does not exceed the predetermined threshold over several successive time steps. Also, alternatively to comparing the distance $d_{i,t}$ of the gaze to the object of interest 2 to a predetermined threshold D, the gaze may be determined to be fixed on the object of interest if the current position $(x_{gaze,t}, y_{gaze,t})$ of the gaze of the human operator 3 is within a boundary associated to the object of interest such as a contour or a box enclosing an image of the object of interest 2 in the current frame $F_t$,

If a gaze fixation on an object of interest 2 from among the $N$ detected and tracked objects of interest 2 within the current frame $F_t$ is determined, the process may proceed to storing an identifier of this object of interest 2 and a time stamp in an Inhibition of Return (IOR) register, in order to register the object of interest 2, and the time when the gaze of the human operator was last fixated on the object of interest 2, in this IOR register.

After the registering step, or directly if the gaze is not determined to be fixated on any object of interest 2 from among the $N$ detected and tracked objects of interest 2 within the current frame $F_t$, the process may proceed to the determination of which, if any, objects of interest 2 from among the $N$ detected and tracked objects of interest 2 within the current frame $F_t$, are already registered in the IOR register. Then, an inhibition-of-return coefficient $f(\Delta t_i)$ may be calculated for each object of interest 2, from among the $N$ detected and tracked objects of interest 2 within the current frame $Ft$, which has been determined, in step S800, to be registered in the IOR register. This inhibition-of-return coefficient $f(\Delta t_i)$ may be calculated as a function of a time $\Delta t_i$ elapsed since the gaze of the human operator 3 was last fixated on that object of interest 2, as may be determined as the difference between the current time step $t$ and the time stamp associated, in the IOR register, to that object of interest 2.

In particular, in order to reflect the time-dependent modulation due to the IOR mechanism, the inhibition-of-return coefficient $f(\Delta t_i)$ may be calculated as a double gamma function, that is, as a weighted combination of two gamma probability density functions, as follows:

$$f(\Delta t_i) = A\left[\frac{\beta_1^{\alpha_1}\Delta t_i^{\alpha_1-1}e^{-\beta_1\Delta t_i}}{\Gamma(\alpha_1)} - c \cdot \frac{\beta_2^{\alpha_2}\Delta t_i^{\alpha_2-1}e^{-\beta_2\Delta t_i}}{\Gamma(\alpha_2)}\right]$$

wherein $\Gamma$ is the gamma function, $\alpha_1$, $\beta_1$ and $\alpha_2$, $\beta_2$ are shape and rate parameters for the first and second gamma probability density distributions, respectively, $A$ is an amplitude of the double gamma function, and c is a mixing weight of the second gamma probability density distribution.

The importance score $I_{i,t}$ of each object of interest 2, from among the $N$ detected and tracked objects of interest 2 within the current frame $F_t$, which are registered in the IOR register, may then be weighed using the corresponding inhibition-of-return coefficient $f(\Delta t_i)$. In particular, the importance score $I_{i,t}$ may be weighed by multiplication by the corresponding inhibition-of-return coefficient $f(\Delta t_i)$:

$$I_{i,t} := I_{i,t} \times f(\Delta t_i)$$

The $M$ objects of interest 2 with the highest importance scores $I_{i,t}$, may then be selected from among the $N$ detected and tracked objects of interest 2 within the current frame $F_t$, wherein $M<N$. Then, an individual attention score $attention\_scores_{j,t}$ for each selected object of interest 2 at the current time step $t$ may be calculated on the basis of the corresponding importance score $I_{j,t}$ and distance $d_{j,t}$ of the gaze. In particular, an exponential decay function may be used to calculate these individual attention scores $attention\_scores_{j,i}$:

$$attention\_scores_{j,t} = I_{j,t} \cdot \exp(decay \cdot d_{j,t})$$

wherein $j$ corresponds to each integer from 1 to $M$.

An overall attention score $attention\_score_t$ for the current time step $t$ may then be calculated as the mean average from these $M$ individual attention scores $attention\_scores_{j,t}$:

$$attention\_score_t = \frac{1}{M} \sum_{j=1}^{M} attention\_scores_{j,t}$$

A current distraction score $distraction\_score_t$ may then be calculated on the basis of the overall attention score $attention\_score_t$ and the mean average of the importance scores $I_{i,t}$ of the $M$ selected objects of interest 2 for the current time step $t$, for instance by inverting the overall attention score $attention\_score_t$ and multiplying it by a mean average of the importance scores $I_{i,t}$ of the $M$ selected objects of interest 2, as according to the equation:

$$distraction\_score_t = amplitude \cdot \frac{1}{M} \sum_{j=1}^{M} I_{j,t} \cdot \frac{1}{attention\_score_t}$$

The current distraction score $distraction\_score_t$ may be buffered in a buffer memory holding the distraction scores for the $T$ latest distraction scores, wherein $T$ is an integer number greater than 1. An overall distraction score for the time interval extending over the corresponding $T$ time steps may then be calculated, for example as a mean average of the $T$ latest distraction scores stored in the buffer memory.

Derivative-free optimization techniques, such as e.g. those taught by Ozaki, Y., Tanigaki, Y., Watanabe, S., and Onishi, M. in "Multiobjective tree-structured parzen estimator for computationally expensive optimization problems", Proceedings of the 2020 genetic and evolutionary computation conference, pp. 533-541, 2020, by Beyer, H. G., & Sendhoff, B. in "Simplify your covariance matrix adaptation evolution strategy. IEEE Transactions on Evolutionary Computation", 21(5), pp. 746-759, 2017, or by Aszemi, N. M., and Dominic, P. D. D. in "Hyperparameter optimization in convolutional neural network using genetic algorithms", International Journal of Advanced Computer Science and Applications, 10(6), 2019, may be used to fine-tune the parameters of this method with respect to detecting distracted operation by the human operator 2. Sequences of engaged and simulated distracted driving data may be used for this optimization. The parameters that may be optimized encompass the fixation distance threshold D, the parameters $\alpha_1$, $\beta_1$ and $\alpha_2$, $\beta_2$, $A$ and $c$ of the double gamma function, buffer length $T$, the number $M$ of selected objects of interest 2, and the decay and amplitude parameters used to calculate, respectively, the individual attention scores $attention\_scores_{j,t}$ and the current distraction score $distraction\_score_t$.

Either the current distraction score $distraction\_score_t$ or the overall distraction score may be compared to a distraction threshold, and may trigger, if the distraction threshold is exceeded, the output of a visual, haptic and/or aural warning through the visual, haptic and/or aural output devices and/or an interruption of operation by the human operator 3 to ensure the safety of the vehicle 1, its human operator 3, and any passengers or bystanders.

Although the present disclosure refers to a specific exemplary embodiment, modifications may be provided to this example without departing from the general scope of the invention as defined by the claims. For instance, although in this example the human operator operates a vehicle, the present invention is also applicable to monitoring attentiveness in the operation of other devices, such as for instance manipulators, where distraction could potentially lead to damage or injury. Therefore, the description and the drawings should be considered in an illustrative rather than in a restrictive sense.

## Claims

1. A computer-implemented method for monitoring attentiveness of a human operator (3), comprising the steps of:

identifying and tracking, in a video feed of a scene at least partially overlapping a field of view of the human operator (3), a plurality of objects of interest (2) in the field of view of the human operator (3);

tracking the gaze of the human operator (3) in an image plane of the video feed;

registering one or more objects of interest (2), among said plurality of objects of interest (2), and a time when the gaze of the human operator (3) was last fixated on each one of the one or more objects of interest (2), in an inhibition-of-return register;

attributing importance scores to the plurality of objects of interest (2) in the field of view of the human operator (3);

calculating an inhibition-of-return coefficient for each one of the one or more objects of interest (2), among said plurality of objects of interest (2), on which the gaze of the human operator (3) has been previously fixated, as a function of a time elapsed since a gaze of the human operator (3) was last fixated on the object of interest (2);

weighing the importance score of each one of the one or more objects of interest (2), among said plurality of objects of interest (2), on which the gaze of the human operator (3) has been previously fixated, based on the inhibition-of-return coefficient calculated for said one of the one or more objects of interest (2) ;

calculating an individual attention score for each object of interest (2) of at least a selection of the plurality of objects of interest (2), based on the importance score of said object of interest (2) of at least the selection of the plurality of objects of interest (2) and a current distance ($d_{j,t}$) between said object of interest (2) of at least the selection of the plurality of objects of interest (2) and the gaze of the human operator (3);

calculating an overall attention score based on the individual attention scores calculated for at least said selection of the plurality of objects of interest (2);

calculating a current distraction score based on the importance scores of at least said selection of the plurality of objects of interest (2) and the overall attention score;

buffering and averaging the current attention score over a time frame to obtain an overall distraction score for the time frame; and

outputting a visual, haptic and/or aural warning and/or interrupting operation by the human operator (3) when said overall distraction score exceeds a predetermined threshold.

2. The computer-implemented method of claim 1, wherein the importance score is weighed by multiplication by the inhibition-of-return coefficient.

3. The computer-implemented method of any one of claims 1 or 2, wherein the inhibition-of-return coefficient is calculated as a double gamma function of the time elapsed since the gaze of the human operator (3) was last fixated on the object of interest (2).

4. The computer-implemented method of any one of claims 1 to 3, wherein the individual attention score is calculated by multiplying the importance score of the object of interest (2) by an exponential decay function of the current distance ($d_{j,t}$) between the object of interest (2) and the gaze of the human operator (3).

5. The computer-implemented method of any one of claims 1 to 4, wherein distance ($d_{j,t}$) between the object of interest (2) and the gaze of the human operator (3) is measured as an Euclidean distance in the image plane of the video feed.

6. The computer-implemented method of any one of claims 1 to 5, wherein the gaze of the human operator (3) is determined to be fixated on the object of interest when the gaze is within a predetermined distance (D) from a centroid of the object of interest.

7. The computer-implemented method of any one of claims 1 to 6, wherein the human operator (3) is operating a vehicle (1).

8. The computer-implemented method of claim 7, wherein the importance score is calculated based on a time-to-collision with respect to the object of interest (2).

9. The computer-implemented method of any one of claims 1 to 8, wherein the step of calculating the individual attention score is carried out for a selection of the plurality of objects of interest (2) with highest importance scores.

10. The computer-implemented method of any one of claims 1 to 9, wherein the overall attention score is calculated as a mean of the individual attention scores calculated for at least said selection of the plurality of objects of interest (2).

11. The computer-implemented method of any one of claims 1 to 10, wherein the current distraction score is calculated by dividing a mean average of the importance scores of at least said selection of the plurality of objects of interest (2) by the overall attention score.

12. A computer program set including instructions for executing the steps of the method of any one of claims 1 to 11 when said program set is executed by at least one computer.

13. A recording medium readable by at least one computer and having recorded thereon at least one computer program including instructions for executing the steps of the method of any one of claims 1 to 11, when said computer program is executed by at least one computer.

14. A system for monitoring attentiveness of a human operator, comprising a data processing device adapted to perform the steps of the method of any one of claims 1 to 11.

15. The system of claim 14, also comprising a camera (12) for providing the video feed of a scene at least partially overlapping the field of view of the human operator (3).

16. The system of claims 14 or 15, also comprising an eye-tracking device (13) for tracking the gaze of the human operator (3).

17. The system of any one of claims 14 to 16, further comprising an output device (13,14,15) for outputting the visual, haptic and/or audible warning and/or interrupting operation by the human operator (3).

18. A vehicle (1) comprising the system of any one of claims 14 to 17 for monitoring attentiveness of a human operator (3) of the vehicle (1).

**Patentansprüche**

1. Computerimplementiertes Verfahren zum Überwachen einer Aufmerksamkeit eines menschlichen Bedieners (3), das die folgenden Schritte umfasst:

Identifizieren und Verfolgen einer Vielzahl von Objekten von Interesse (2) in einem Sichtfeld eines menschlichen Bedieners (3) in einem Videofeed einer Szene, die mindestens teilweise das Sichtfeld des menschlichen Bedieners (3) überlappt;
Verfolgen des Blicks des menschlichen Bedieners (3) auf einer Bildebene des Videofeeds;
Registrieren von einem oder mehreren Objekten von Interesse (2) unter der Vielzahl von Objekten von Interesse (2) und einer Zeit, zu der der Blick des menschlichen Bedieners (3) zuletzt auf jedem des einen oder der mehreren Objekte von Interesse (2) fixiert war, in einem Hemmung-der-Rückkehr-Register;
Zuordnen von Wichtigkeitsbewertungen zur Vielzahl von Objekten von Interesse (2) im Sichtfeld des menschlichen Bedieners (3);
Berechnen eines Hemmung-der-Rückkehr-Koeffizienten für jedes des einen oder der mehreren Objekte von Interesse (2) unter der Vielzahl von Objekten von Interesse (2), auf dem der Blick des menschlichen Bedieners (3) zuvor fixiert war, als eine Funktion einer Zeit, die vergangen ist, seit ein Blick des menschlichen Bedieners (3) zuletzt auf das Objekt von Interesse (2) fixiert war;
Gewichten der Wichtigkeitsbewertung von jedem des einen oder der mehreren Objekte von Interesse (2) unter der Vielzahl von Objekten von Interesse (2), auf dem der Blick des menschlichen Bedieners (3) zuvor fixiert war, auf Basis des Hemmung-der-Rückkehr-Koeffizienten, der für das eine des einen oder der mehreren Objekte von Interesse (2) berechnet wurde;
Berechnen einer individuellen Aufmerksamkeitsbewertung für jedes Objekt von Interesse (2) mindestens einer Auswahl der Vielzahl von Objekten von Interesse (2) auf Basis der Wichtigkeitsbewertung des Objekts von Interesse (2) mindestens der Auswahl der Vielzahl von Objekten von Interesse (2) und eines aktuellen Abstands ($d_{j,t}$) zwischen dem Objekt von Interesse (2) mindestens der Auswahl der Vielzahl von Objekten von Interesse (2) und dem Blick des menschlichen Bedieners (3);
Berechnen einer gesamten Aufmerksamkeitsbewertung auf Basis der individuellen Aufmerksamkeitsbewertungen, die für mindestens die Auswahl der Vielzahl von Objekten von Interesse (2) berechnet wurden;
Berechnen einer aktuellen Ablenkungsbewertung auf Basis der Wichtigkeitsbewertungen mindestens der Auswahl der Vielzahl von Objekten von Interesse (2) und der gesamten Aufmerksamkeitsbewertung;
Puffern und Mitteln der aktuellen Aufmerksamkeitsbewertung über einen Zeitrahmen, um eine gesamte Ablenkungsbewertung für den Zeitraum zu erhalten; und

Ausgeben einer visuellen, haptischen und/oder auditiven Warnung und/oder Unterbrechen einer Bedienung durch den menschlichen Bediener (3), wenn die gesamte Ablenkungsbewertung einen vorbestimmten Schwellwert überschreitet.

2. Computerimplementiertes Verfahren nach Anspruch 1, wobei die Wichtigkeitsbewertung durch eine Multiplikation mit dem Hemmung-der-Rückkehr-Koeffizienten gewichtet wird.

3. Computerimplementiertes Verfahren nach einem der Ansprüche 1 oder 2, wobei der Hemmung-der-Rückkehr-Koeffizienten als eine doppelte Gammafunktion der Zeit berechnet wird, die vergangen ist, seit der Blick des menschlichen Bedieners (3) zuletzt auf dem Objekt von Interesse (2) fixiert war.

4. Computerimplementiertes Verfahren nach einem der Ansprüche 1 bis 3, wobei die individuelle Aufmerksamkeitsbewertung durch Multiplizieren der Wichtigkeitsbewertung des Objekts von Interesse (2) mit einer exponentiellen Zerfallsfunktion des aktuellen Abstands ($d_{j,t}$) zwischen dem Objekt von Interesse (2) und dem Blick des menschlichen Bedieners (3) berechnet wird.

5. Computerimplementiertes Verfahren nach einem der Ansprüche 1 bis 4, wobei der Abstand ($d_{j,t}$) zwischen dem Objekt von Interesse (2) und dem Blick des menschlichen Bedieners (3) als ein euklidischer Abstand in der Bildebene des Videofeeds gemessen wird.

6. Computerimplementiertes Verfahren nach einem der Ansprüche 1 bis 5, wobei bestimmt wird, dass der Blick des menschlichen Bedieners (3) auf das Objekt von Interesse fixiert ist, wenn der Blick innerhalb eines vorbestimmten Abstands ($D$) von einem Mittelpunkt des Objekts von Interesse liegt.

7. Computerimplementiertes Verfahren nach einem der Ansprüche 1 bis 6, wobei der menschliche Bediener (3) ein Fahrzeug (1) bedient.

8. Computerimplementiertes Verfahren nach Anspruch 7, wobei die Wichtigkeitsbewertung auf Basis einer Zeit-bis-Kollision mit Bezug auf das Objekt von Interesse (2) berechnet wird.

9. Computerimplementiertes Verfahren nach einem der Ansprüche 1 bis 8, wobei der Schritt des Berechnens der individuellen Aufmerksamkeitsbewertung für eine Auswahl der Vielzahl von Objekten von Interesse (2) mit höchsten Wichtigkeitsbewertungen vorgenommen wird.

10. Computerimplementiertes Verfahren nach einem der Ansprüche 1 bis 9, wobei die gesamte Aufmerksamkeitsbewertung als ein Mittel der individuellen Aufmerksamkeitsbewertungen berechnet wird, die für mindestens die Auswahl der Vielzahl von Objekten von Interesse (2) berechnet wurden.

11. Computerimplementiertes Verfahren nach einem der Ansprüche 1 bis 10, wobei die aktuelle Ablenkungsbewertung durch Teilen eines arithmetischen Mittels der Wichtigkeitsbewertungen mindestens der Auswahl der Vielzahl von Objekten von Interesse (2) durch die gesamte Aufmerksamkeitsbewertung berechnet wird.

12. Computerprogrammsatz, der Anweisungen zum Ausführen der Schritte des Verfahrens nach einem der Ansprüche 1 bis 11 beinhaltet, wenn der Programmsatz von mindestens einem Computer ausgeführt wird.

13. Aufzeichnungsmedium, das von mindestens einem Computer lesbar ist und auf dem mindestens ein Computerprogramm gespeichert ist, das Anweisungen zum Ausführen der Schritte des Verfahrens nach einem der Ansprüche 1 bis 11 beinhaltet, wenn das Computerprogramm von mindestens einem Computer ausgeführt wird.

14. System zum Überwachen einer Aufmerksamkeit eines menschlichen Bedieners, das eine Datenverarbeitungsvorrichtung umfasst, die angepasst ist, die Schritte des Verfahrens nach einem der Ansprüche 1 bis 11 durchzuführen.

15. System nach Anspruch 14, das außerdem eine Kamera (12) zum Bereitstellen des Videofeeds einer Szene umfasst, die mindestens teilweise das Sichtfeld des menschlichen Bedieners (3) überlappt.

16. System nach Anspruch 14 oder 15, das außerdem eine Augenverfolgungsvorrichtung (13) zum Verfolgen des Blicks des menschlichen Bedieners (3) umfasst.

17. System nach einem der Ansprüche 14 bis 16, das ferner zum Ausgeben der visuellen, haptischen und/oder auditiven Warnung und/oder zum Unterbrechen einer Bedienung durch den menschlichen Bediener (3) eine Ausgabevorrichtung (13,14,15) umfasst.

18. Fahrzeug (1), das das System nach einem der Ansprüche 14 bis 17 zum Überwachen einer Aufmerksamkeit eines menschlichen Bedieners (3) des Fahrzeugs (1) umfasst.


**Revendications**

1. Procédé mis en œuvre par ordinateur pour surveiller l'attention d'un opérateur humain (3), comprenant les étapes suivantes :

   dans un flux vidéo d'une scène chevauchant au moins partiellement un champ de vision de l'opérateur humain (3), identifier et suivre une pluralité d'objets d'intérêt (2) dans le champ de vision de l'opérateur humain (3) ;
   suivre le regard de l'opérateur humain (3) dans un plan d'image du flux vidéo ;
   inscrire un ou plusieurs objets d'intérêt (2) parmi ladite pluralité d'objets d'intérêt (2) et un moment où le regard de l'opérateur humain (3) s'est fixé pour la dernière fois sur chacun des un ou plusieurs objets d'intérêt (2), dans un registre d'inhibition de retour ;
   attribuer des scores d'importance à la pluralité d'objets d'intérêt (2) dans le champ de vision de l'opérateur humain (3) ;
   calculer un coefficient d'inhibition de retour pour chacun des un ou plusieurs objets d'intérêt (2) parmi ladite pluralité d'objets d'intérêt (2) sur lequel le regard de l'opérateur humain (3) s'est précédemment fixé, en fonction d'un temps écoulé depuis que le regard de l'opérateur humain (3) s'est fixé pour la dernière fois sur l'objet d'intérêt (2) ;
   pondérer le score d'importance de chacun des un ou plusieurs objets d'intérêt (2) parmi ladite pluralité d'objets d'intérêt (2) sur lequel le regard de l'opérateur humain (3) s'est précédemment fixé, sur la base du coefficient d'inhibition de retour calculé pour cet objet des un ou plusieurs objets d'intérêt (2) ;
   calculer un score d'attention individuel pour chaque objet d'intérêt (2) d'au moins une sélection de la pluralité d'objets d'intérêt (2), sur la base du score d'importance dudit objet d'intérêt (2) d'au moins la sélection de la pluralité d'objets d'intérêt (2) et d'une distance ($d_{j,t}$) actuelle entre ledit objet d'intérêt (2) d'au moins la sélection de la pluralité d'objets d'intérêt (2) et le regard de l'opérateur humain (3) ;
   calculer un score d'attention global sur la base des scores d'attention individuels calculés pour au moins ladite sélection de la pluralité d'objets d'intérêt (2) ;
   calculer un score de distraction actuel sur la base des scores d'importance d'au moins ladite sélection de la pluralité d'objets d'intérêt (2) et du score d'attention global ;
   mettre en mémoire tampon le score d'attention actuel et en faire la moyenne sur une période de temps afin d'obtenir un score de distraction global de cette période de temps ; et
   émettre un avertissement visuel, haptique et/ou oral, et/ou interrompre l'action de l'opérateur humain (3) lorsque ledit score de distraction global dépasse un seuil prédéterminé.

2. Procédé mis en œuvre par ordinateur selon la revendication 1, dans lequel le score d'importance est pondéré par une multiplication par le coefficient d'inhibition de retour.

3. Procédé mis en œuvre par ordinateur selon l'une quelconque des revendications 1 ou 2, dans lequel le coefficient d'inhibition de retour est calculé comme une fonction gamma double du temps écoulé depuis que le regard de l'opérateur humain (3) s'est fixé pour la dernière fois sur l'objet d'intérêt (2).

4. Procédé mis en œuvre par ordinateur selon l'une quelconque des revendications 1 à 3, dans lequel le score d'attention individuel est calculé en multipliant le score d'importance de l'objet d'intérêt (2) par une fonction de décroissance exponentielle de la distance ($d_{j,t}$) actuelle entre l'objet d'intérêt (2) et le regard de l'opérateur humain (3).

5. Procédé mis en œuvre par ordinateur selon l'une quelconque des revendications 1 à 4, dans lequel la distance ($d_{j,t}$) entre l'objet d'intérêt (2) et le regard de l'opérateur humain (3) est mesurée en tant que distance euclidienne dans le plan d'image du flux vidéo.

6. Procédé mis en œuvre par ordinateur selon l'une quelconque des revendications 1 à 5, dans lequel on détermine que le regard de l'opérateur humain (3) est fixé sur l'objet d'intérêt lorsque le regard se trouve à une distance (D) prédéterminée à partir d'un centroïde de l'objet d'intérêt.

7. Procédé mis en œuvre par ordinateur selon l'une quelconque des revendications 1 à 6, dans lequel l'opérateur humain (3) agit sur un véhicule (1).

8. Procédé mis en œuvre par ordinateur selon la revendication 7, dans lequel le score d'importance est calculé sur la base d'un temps restant avant collision par rapport à l'objet d'intérêt (2).

9. Procédé mis en œuvre par ordinateur selon l'une quelconque des revendications 1 à 8, dans lequel l'étape de calcul du score d'attention individuel est effectuée pour une sélection de la pluralité d'objets d'intérêt (2) dont les scores d'importance sont les plus élevés.

10. Procédé mis en œuvre par ordinateur selon l'une quelconque des revendications 1 à 9, dans lequel le score d'attention global est calculé comme une moyenne des scores d'attention individuels calculés pour au moins ladite sélection de la pluralité d'objets d'intérêt (2).

11. Procédé mis en œuvre par ordinateur selon l'une quelconque des revendications 1 à 10, dans lequel le score de distraction actuel est calculé en divisant une moyenne des scores d'importance d'au moins ladite sélection de la pluralité d'objets d'intérêt (2) par le score d'attention global.

12. Ensemble de programmes informatiques comportant des instructions pour exécuter les étapes du procédé selon l'une quelconque des revendications 1 à 11 lorsque ledit ensemble de programmes est exécuté par au moins un ordinateur.

13. Support d'enregistrement lisible par au moins un ordinateur sur lequel est enregistré au moins un programme informatique comportant des instructions pour exécuter les étapes du procédé selon l'une quelconque des revendications 1 à 11 lorsque ledit programme informatique est exécuté par au moins un ordinateur.

14. Système destiné à surveiller l'attention d'un opérateur humain comprenant un dispositif de traitement de données adapté pour effectuer les étapes du procédé selon l'une quelconque des revendications 1 à 11.

15. Système selon la revendication 14, comprenant en outre une caméra (12) pour fournir le flux vidéo d'une scène chevauchant au moins partiellement le champ de vision de l'opérateur humain (3).

16. Système selon la revendications 14 ou 15, comprenant en outre un dispositif de suivi oculaire (13) pour suivre le regard de l'opérateur humain (3).

17. Système selon l'une quelconque des revendications 14 à 16, comprenant en outre un dispositif de sortie (13, 14, 15) pour émettre l'avertissement visuel, haptique et/ou oral, et/ou interrompre l'action de l'opérateur humain (3).

18. Véhicule (1) comprenant le système selon l'une quelconque des revendications 14 à 17 destiné à surveiller l'attention d'un opérateur humain (3) du véhicule (1).

# FIG.1

**FIG.2**

**FIG.3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHARLIE KLAUER et al.** The impact of driver inattention on near-crash/crash risk: An analysis using the 100-car naturalistic driving study data. National Highway Traffic Safety Administration, 2006
- **CHLOE ROBBINS** ; **PETER CHAPMAN**. How does drivers' visual search change as a function of experience? A systematic review and meta-analysis. *Accident Analysis & Prevention*, 2019, vol. 132, 105266
- **LISHENGSA YUE et al.** Assessment of the safety benefits of vehicles' advanced driver assistance, connectivity and low level automation systems. *Accident Analysis & Prevention*, 2018, vol. 117, 55-64
- **ALAA EL KHATIB** ; **CHAOJIE OU** ; **FAKHRI KARRAY**. Driver inattention detection in the context of next-generation autonomous vehicles design: A survey. *IEEE Transactions on Intelligent Transportation Systems*, 2019, vol. 21 (11), 4483-4496
- **JOHN GASPAR** ; **CHER CARNEY**. The effect of partial automation on driver attention: A naturalistic driving study. *Human factors*, 2019, vol. 61 (8), 1261-1276
- **JOOST CF DE WINTER et al.** Effects of adaptive cruise control and highly automated driving on workload and situation awareness: A review of the empirical evidence. *Transportation research part F: traffic psychology and behaviour*, 2014, vol. 27, 196-217
- **TOBIAS VOGELPOHL et al.** Asleep at the automated wheel-Sleepiness and fatigue during highly automated driving. *Accident Analysis & Prevention*, 2019, vol. 126, 70-84
- Real-time workload classification during driving using hypernetworks. **RUOHAN WANG** ; **PIERLUIGI V AMADORI** ; **YIANNIS DEMIRIS**. 2018 IEEE/RSJ International Conference on Intelligent Robots and Systems (IROS. IEEE, 2018, 3060-3065
- Cluster regularized extreme learning machine for detecting mixed-type distraction in driving. **TIANCHI LIU et al.** 2015 IEEE 18th International Conference on Intelligent Transportation Systems. IEEE., 2015, 1323-1326
- **KESHAV SESHADRI et al.** Driver cell phone usage detection on strategic highway research program (SHRP2) face view videos. *Proceedings of the IEEE Conference on Computer Vision and Pattern Recognition Workshops*, 2015, 35-43

- Analysis of peripheral vehicular behavior in driver's gaze transition: Differences between driver's neutral and cognitive distraction states. **TAKATSUGU HIRAYAMA et al.** 17th International IEEE Conference on Intelligent Transportation Systems (ITSC). IEEE, 2014, 962-967
- **FABIO TANGO** ; **MARCO BOTTA**. Real-time detection system of driver distraction using machine learning. *IEEE Transactions on Intelligent Transportation Systems*, 2013, vol. 14 (2), 894-905
- **YULAN LIANG** ; **JOHN D LEE** ; **LORA YEKHSHAT-YAN**. How dangerous is looking away from the road? Algorithms predict crash risk from glance patterns in naturalistic driving. *Human factors*, 2012, vol. 54 (6), 1104-1116
- **LICHAO YANG et al.** Recognition of visual-related non-driving activities using a dual-camera monitoring system. *Pattern Recognition*, 2021, vol. 116, 107955
- **BJÖRN SCHULLER SCHULLER et al.** *Online Driver Distraction Detection Using Long Short-Term Memory*, 2020
- **NANXIANG LI** ; **CARLOS BUSSO**. Detecting drivers' mirror-checking actions and its application to maneuver and secondary task recognition. *IEEE Transactions on Intelligent Transportation Systems*, 2015, vol. 17 (4), 980-992
- **YUAN LIAO et al.** Detection of driver cognitive distraction: A comparison study of stop-controlled intersection and speed-limited highway. *IEEE Transactions on Intelligent Transportation Systems*, 2016, vol. 17 (6), 1628-1637
- **JIE CHEN et al.** Fine-grained detection of driver distraction based on neural architecture search. *IEEE Transactions on Intelligent Transportation Systems*, 2021, vol. 22 (9), 5783-5801
- **NANXIANG LI** ; **CARLOS BUSSO** ; **KESHAV SESHADRI** ; **YUAN LIAO et al.** Detection of driver cognitive distraction: A comparison study of stop-controlled intersection and speed-limited highway. *IEEE Transactions on Intelligent Transportation Systems*, 2016, vol. 17 (6), 1628-1637
- **NANXIANG LI** ; **CARLOS BUSSO**. Predicting perceived visual and cognitive distractions of drivers with multimodal features. *IEEE Transactions on Intelligent Transportation Systems*, 2014, vol. 16 (1), 51-65

- **MAURICIO MUÑOZ et al.** Distinguishing patterns in drivers' visual attention allocation using Hidden Markov Models. *Transportation research part F: traffic psychology and behaviour*, 2016, vol. 43, 90-103
- Real-time workload classification during driving using hypernetworks. **RUOHAN WANG** ; **PIERLUIGI V AMADORI** ; **YIANNIS DEMIRIS**. 2018 IEEE/RSJ International Conference on Intelligent Robots and Systems (IROS). IEEE, 2018, 3060-3065
- **MARTIN WOLLMER et al.** Online driver distraction detection using long short-term memory. *IEEE Transactions on Intelligent Transportation Systems*, 2011, vol. 12 (2), 574-582
- The driver distraction detection algorithm AttenD. **KATJA KIRCHER** ; **CHRISTER AHLSTRÖM**. Driver distraction and inattention. CRC Press, 2017, 327-348
- **YINAN MA** ; **JING WU** ; **CHENGNIAN LONG**. GazeFCW: Filter Collision Warning Triggers by Detecting Driver's Gaze Area. *Proceedings of the 1st Workshop on Machine Learning on Edge in Sensor Systems*, 2019, 13-18
- **MICHAEL BAUER et al.** *Detection and recognition of traffic signs inside the attentional visual field of drivers*
- Traffic awareness driver assistance based on stereovision, eye-tracking, and head-up display. **TOBIAS LANGNER et al.** 2016 IEEE International Conference on Robotics and Automation (ICRA). IEEE, 2016, 3167-3173
- Attention estimation by simultaneous analysis of viewer and view. **ASHISH TAWARI et al.** 17th International IEEE Conference on Intelligent Transportation Systems (ITSC). IEEE, 2014, 1381-1387
- Multi-hypothesis multi-model driver's gaze target tracking. **TOBIAS LANGNER** ; **JULIAN SCHWEHR** ; **VOLKER WILLERT et al.** In: 2018 21st International Conference on Intelligent Transportation Systems (ITSC). IEEE, 2018, 1427-1434
- Seen and missed traffic objects: A traffic object-specific awareness estimation. **TOBIAS BÄR et al.** 2013 IEEE Intelligent Vehicles Symposium (IV). IEEE, 2013, 31-36
- Measuring driver awareness based on correlation between gaze behavior and risks of surrounding vehicles. **YINAN MA** ; **JING WU** ; **CHENGNIAN LONG** ; **MASATAKA MORI et al.** 2012 15th International IEEE Conference on Intelligent Transportation Systems. IEEE, 2012, 644-647
- **CHRISTER AHLSTROM** ; **GEORGE GEORGOULAS** ; **KATJA KIRCHER**. Towards a context-dependent multi-buffer driver distraction detection algorithm. *IEEE transactions on intelligent transportation systems*, 2021, vol. 23 (5), 4778-4790
- **MAHDI REZAEI** ; **REINHARD KLETTE**. Look at the driver, look at the road: No distraction! no accident!. *In: Proceedings of the IEEE conference on computer vision and pattern recognition*, 2014, 129-136
- **LUKE FLETCHER** ; **ALEXANDER ZELINSKY**. Driver inattention detection based on eye gaze-Road event correlation. *The international journal of robotics research*, 2009, vol. 28 (6), 774-801
- Measuring driver situation awareness using region-of-interest prediction and eye tracking. **MARKUS HOFBAUER et al.** 2020 IEEE International Symposium on Multimedia (ISM). IEEE., 2020, 91-95
- **ANUP DOSHI et al.** Attention estimation by simultaneous observation of viewer and view. *2010 IEEE Computer Society Conference on Computer Vision and Pattern Recognition Workshops (CVPRW)*, 21-27
- **MICHAEL I POSNER** ; **YOAV COHEN et al.** Components of visual orienting. *Attention and performance X: Control of language processes*, 1984, vol. 32, 531-556
- **RAYMOND M KLEIN**. Inhibition of return. *Trends in cognitive sciences*, 2000, vol. 4 (4), 138-147
- **JUAN LUPIÁÑEZ et al.** Does IOR occur in discrimination tasks? Yes, it does, but later. *Perception & psychophysics*, 1997, vol. 59, 1241-1254
- **ARTHUR G SAMUEL** ; **DONNA KAT**. Inhibition of return: A graphical meta-analysis of its time course and an empirical test of its temporal and spatial properties. *Psychonomic bulletin & review*, 2003, vol. 10, 897-906
- **KUN SONG et al.** Behavioral oscillations in attention: rhythmic $\alpha$ pulses mediated through $\theta$ band. *Journal of Neuroscience*, 2014, vol. 34 (14), 4837-4844
- **AI-SU LI et al.** The time course of inhibition of return: Evidence from steady-state visual evoked potentials. *Frontiers in psychology*, 2017, vol. 8, 1562
- **WILLIAM D. PENNY et al.** *Statistical Parametric Mapping: The Analysis of Functional Brain Images*
- **S. REN** ; **K. HE** ; **R. GIRSHICK** ; **J. SUN IN**. Faster r-cnn: towards real-time object detection with region proposal networks. *IEEE Transactions on Pattern Analysis & Machine Intelligence*, 2017, vol. 6, 1137-1149
- Spatial pyramid pooling in deep convolutional networks for visual recognition. **K. HE** ; **X. ZHANG** ; **S. REN** ; **J. SUN**. ECCV. Springer, 2014, 346-361
- **J. REDMON** ; **S. DIVVALA** ; **R. GIRSHICK** ; **A. FARHADI**. You only look once: Unified, real-time object detection. *CVPR*, 2016, 779-788
- End-to-end object detection with transformers. **N. CARION** ; **F. MASSA** ; **G. SYNNAEVE** ; **N. USUNIER** ; **A. KIRILLOV** ; **S. ZAGORUYKO**. European Conference on Computer Vision. Springer, 2020, 213-229

- **K. WANG** ; **M. LIU**. YOLOv3-MT: A YOLOv3 using multi-target tracking for vehicle visual detection. *Applied Intelligence*
- **PEREIRA, R** ; **CARVALHO, G.** ; **GARROTE, L** ; **NUNES, U. J**. Sort and deep-SORT based multi-object tracking for mobile robotics: Evaluation with new data association metrics. *Applied Sciences*, 2022, vol. 12 (3), 1319
- **CAO, J.** ; **PANG, J.** ; **WENG, X** ; **KHIRODKAR, R.** ; **KITANI, K.** Observation-centric sort: Rethinking sort for robust multi-object tracking. *Proceedings of the IEEE/CVF Conference on Computer Vision and Pattern Recognition*, 2023, 9686-9696
- **TIAN, W** ; **LAUER, M** ; **CHEN, L.** Online multi-object tracking using joint domain information in traffic scenarios. *IEEE Transactions on Intelligent Transportation Systems*, 2019, vol. 21 (1), 374-384
- **ALTHOFF, M** ; **MERGEL, A**. Comparison of markov chain abstraction and monte carlo simulation for the safety assessment of autonomous cars. *IEEE Transactions on Intelligent Transportation Systems*, 2011, vol. 12 (4), 1237-1247
- **GREENE, D** ; **LIU, J.** ; **REICH, J.** ; **HIROKAWA, Y.** ; **SHINAGAWA, A.** ; **ITO, H.** ; **MIKAMI, T.** An efficient computational architecture for a collision early-warning system for vehicles, pedestrians, and bicyclists. *IEEE Transactions on intelligent transportation systems*, 2011, vol. 12 (4), 942-953
- Collision pattern modeling and real-time collision detection at road intersections. **SALIM, F.D.** ; **LOKE, S.W** ; **RAKOTONIRAINY, A** ; **SRINIVASAN, B** ; **KRISHNASWAMY, S**. IEEE Intelligent Transportation Systems Conference. IEEE, 2007, 161-166
- **LEFÈVRE, S** ; **VASQUEZ, D.** ; **LAUGIER, C**. A survey on motion prediction and risk assessment for intelligent vehicles. *ROBOMECH journal*, 2014, vol. 1 (1), 1-14
- Goal-oriented object importance estimation in on-road driving videos. **GAO, M** ; **TAWARI, A** ; **MARTIN, S**. 2019 International Conference on Robotics and Automation (ICRA). IEEE, 2019, 5509-5515
- **KIM, J.** ; **CANNY, J.** Interpretable learning for self-driving cars by visualizing causal attention. *Proceedings of the IEEE international conference on computer vision*, 2017, 2942-2950
- **LI, C.** ; **CHAN, S.H.** ; **CHEN, Y.T**. Driver-centric risk object identification. *arXiv preprint arXiv:2106.13201*, 2021
- **OZAKI, Y** ; **TANIGAKI, Y.** ; **WATANABE, S** ; **ONISHI, M.** Multiobjective tree-structured parzen estimator for computationally expensive optimization problems. *Proceedings of the 2020 genetic and evolutionary computation conference*, 2020, 533-541
- **BEYER, H. G.** ; **SENDHOFF, B.** *Simplify your covariance matrix adaptation evolution strategy. IEEE Transactions on Evolutionary Computation*, 2017, vol. 21 (5), 746-759
- **ASZEMI, N. M.** ; **DOMINIC, P. D. D**. Hyperparameter optimization in convolutional neural network using genetic algorithms. *International Journal of Advanced Computer Science and Applications*, 2019, vol. 10 (6)